(19) Europäisches Patentamt

European Patent Office

Office européen des brevets

(11) **EP 0 918 075 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(51) Int Cl.⁷: **C09C 1/24**, C08K 3/00, D21H 17/67, C04B 14/30, C09D 7/12

(21) Anmeldenummer: **98121058.6**

(22) Anmeldetag: **06.11.1998**

(54) **Hitzestabile Eisenoxidgelb-Pigmente**

Heat stable yellow iron oxide pigments

Pigments d'oxyde de fer jaune stables à la chaleur

(84) Benannte Vertragsstaaten:
**BE DE ES FR GB IT NL**

(30) Priorität: **19.11.1997 DE 19751142**

(43) Veröffentlichungstag der Anmeldung:
**26.05.1999 Patentblatt 1999/21**

(73) Patentinhaber: **Bayer Aktiengesellschaft 51368 Leverkusen (DE)**

(72) Erfinder:
• **Burow, Wilfried Dr. 47809 Krefeld (DE)**
• **Oehlert, Wolfgang Dr. Wheeling, WV 26003-9357 (US)**

(56) Entgegenhaltungen:
**EP-A- 0 221 473     US-A- 4 374 677 US-A- 4 376 656**

**Beschreibung**

Die vorliegende Erfindung betrifft farbreine Silking-arme Eisenoxidgelb-Pigmente mit nahezu isometrischer Teilchenform und hoher Hitzebeständigkeit.

Eisenoxid-Farbpigmente, die als ökologisch unbedenkliche Färbemittel in Keramiken, Baustoffen, Kunststoffen, Lacken und Papier zum Einsatz kommen, können grundsätzlich in schwarzen, gelben, roten und braunen Farbtönen erhalten werden.

Eisenoxid-Pigmente erhält man, wie in Ullmann's Encyclopedia of Industrial Chemistry, VCH, Weinheim 1992, Vol. A20, S. 298ff beschrieben, durch Festphasenreaktionen (Rot-, Braun- und Schwarzpigmente), Fällungs- und Hydrolysereaktionen von Eisensalzen (Gelb-, Rot-, Orange- und Schwarzpigmente) sowie durch den in DE-A 463 773 beschriebenen Lauxprozeß der Oxidation von Eisen mit aromatischen Nitroverbindungen in Gegenwart hydrolysierbarer, mehrwertiger Salze (Schwarz- und Gelbpigmente).

Natürliche und synthetische Eisenoxidgelb-Pigmente werden zur Einfärbung von Baustoffen, Lacken, Kunststoffen und Papier verwendet.

Herkömmliche helle, farbreine Eisenoxidgelb-Pigmente liegen als nadelförmige Pigmentteilchen vor und haben wegen ihrer Nadelform gegenüber isometrischen Teilchen ein verringertes Schüttgewicht, das sich bei der Lagerung nachteilig auswirkt.

Im Vergleich zu isometrischen Pigmentteilchen beobachtet man bei Lackanreibungen von nadelförmigen Pigmenten außerdem unerwünscht hohe Viskositäten. Zudem ist der Bindemittelbedarf der nadelförmigen Pigmente deutlich höher als bei isometrischen Pigmenten.

Aufgrund ihrer Nadelform richten sich die anisometrischen Eisenoxidgelb-Pigmente bei Anstrichen und bei Einarbeitung in Kunststoffolien in einer Vorzugsrichtung parallel zu ihrer Nadelachse aus. Da ihr optisches Verhalten (Absorption und Streuung) in Richtung der Nadelachse zu dem optischen Verhalten im rechten Winkel zur Nadelachse unterschiedlich ist, ergeben sich für den Betrachter unterschiedliche Farbeindrücke je nachdem, ob man auf den Lackanstrich oder die eingefärbte Folie in Vorzugsrichtung sieht oder senkrecht dazu. Dieser unerwünschte Effekt, der "Silking" genannt wird, da er zuerst bei Seidengeweben beobachtet wurde, schränkt die Verwendung von Eisenoxidgelb-Pigmenten erheblich ein.

Den Silking-Grad von Eisenoxidgelb-Pigmenten kann man dadurch senken, daß man nadelförmige Eisenoxid-Pigmente mit isometrischen Gelbpigmenten wie Nickelrutilgelb mischt. Nickelrutilgelb-Pigmente stehen erheblich kostengünstiger als Eisenoxidgelb-Pigmente ein. Isometrische Pigmente wie Nickelrutilgelb zeigen naturgemäß keinen Silking-Effekt.

Da gelbe Eisenoxid-Pigmente ökologisch unbedenklich sind und kostengünstig herzustellen sind, ist man grundsätzlich bestrebt, gelbe Einfärbungen möglichst ausschließlich mit Eisenoxidgelb-Pigmenten ohne Einsatz teurerer Pigmente wie Nickelrutilgelb durchzuführen.

Nachteilig bei herkömmlichen Eisenoxidgelb-Pigmenten ist neben dem beobachteten Silking-Effekt ihre unzureichende Hitzebeständigkeit. Die Abspaltung von chemisch gebundenem Wasser im Goethit bei Wärmebelastung führt zur unerwünschten Verfärbung nach braunrot. Aufgrund der zu geringen Hitzebeständigkeit können herkömmliche Eisenoxidgelb-Pigmente in der Papierindustrie, in vielen Kunststoffsystemen, beispielsweise bei der Einfärbung von thermoplastischen Kunststoffen oder beim Coil Coat-Verfahren für Lackanwendungen, nicht eingesetzt werden.

Da Eisenoxidgelb-Pigmente grundsätzlich die Vorteile hoher Umweltverträglichkeit und geringer Herstellkosten haben, gibt es zahlreiche technische Lösungen, einzelne der vorgenannten ungünstigen Eigenschaften der Eisenoxidgelb-Pigmente zu verbessern.

Für Lackanstriche mit Eisenoxidgelb-Pigmenten, die geringe Viskosität und hohe Farbreinheit sowie einen geringen Bindemittelbedarf erfordern, wurden speziell für das jeweilige Bindelmittelsystem anorganisch oder organisch nachbehandelte, nadelförmige Eisenoxidgelb-Pigmente entwickelt. Diese Pigmente zeigen zwar im Bindemittel verringerte Viskositäten bei geringem Bindemittelbedarf, sie sind aber für alle Lackanreibungen ungeeignet, bei denen ihr typisch hoher Silking-Effekt störend ist.

Helle, farbreine, Silking-arme Eisenoxidgelb-Pigmente, die aus speziellen Keimen erhalten werden, die in Gegenwart von Verbindungen der Elemente B, Al, Ga, Si, Ge, Sn oder Pb erzeugt werden (DE-A 33 26 632), haben zwar zum Einfärben von Kunststoffolien ausreichende Silking-Freiheit, sind jedoch zur Kunststoffeinfärbung nicht hinreichend hitzebeständig.

Zur Verbesserung der Hitzebeständigkeit von Eisenoxidgelb-Pigmenten wurden Beschichtungsverfahren mit Metallphosphaten (DE-A 2 740 861 und US-A 4 053 325), mit Al-Verbindungen oder Hydrothermalsynthesen (US-A 4 376 677, JP-A 53 102 298, US-A 4 376 656) vorgeschlagen. Man erhält Eisenoxidgelb-Pigmente mit verbesserter Hitzebeständigkeit, die jedoch aufgrund anderer nachteiliger Eigenschaften, beispielsweise aufgrund ihres hohen Preises, ihrer geringen Farbreinheit und ihres geringen Färbevermögen und ihres ausgeprägten Silking-Effekts, nur eingeschränkt eingesetzt werden können.

So sind zur Verwendung von Gelbpigmenten bei der Einfärbung von Kunststoffolien ausreichende Hitzebeständigkeit, ausreichende Farbreinheit und Farbstärke sowie Silking-Freiheit Voraussetzung. Herkömmliche; beschichtete Eisenoxidgelb-Pigmente kommen hier wegen ihres Silking-Effekts nicht zum Einsatz. Hydrothermal erzeugte, hitzebeständige Eisenoxidgelb-Pigmente werden für Kunststoffolien wegen ihrer hohen Kosten, ihrer geringen Farbstärke und ihres Silking-Effekts nicht verwendet.

Produkte, die die Eigenschaften hohe Helligkeit, hohe Farbreinheit, ausreichende Hitzebeständigkeit, geringe Viskosität, geringer Silking-Effekt, niedriger Bindemittelbedarf und hohes Schüttgewicht in sich vereinen, waren bislang nicht bekannt.

Somit gibt es für Eisenoxidgelb-Pigmente bisher nur technische Lösungen, die einzelne nachteilige Eigenschaften herkömmlicher Eisenoxidgelb-Pigmente wie Silking-Effekt oder Hitzebeständigkeit verbessern.

Der vorliegenden Erfindung liegt daher die Aufgabe zugrunde, helle, farbreine, Silking-arme Eisenoxidgelb-Pigmente bereitzustellen, die eine für die Einfärbung von Kunststoffolien ausreichende Hitzestabilität aufweisen.

Überraschenderweise wurde nun gefunden, die gewünschten Eisenoxidgelb-Pigmente, die die vorgenannten Eigenschaften in einer bislang nicht bekannten Kombination günstiger Eigenschaften enthalten, mittels eines modifizierten Nitrobenzolreduktionsprozesses in Gegenwart von Verbindungen der Elemente der 3. und/oder 4. Hauptgruppe des Periodensystems hergestellt werden können.

Gegenstand der Erfindung sind Eisenoxidgelb-Pigmente mit einem Fe-Gehalt größer als 58 Gew.-%, mit einem Silking-Index kleiner als 5 und Farbwerten bei einer Pigmentvolumenkonzentration von 10% im Prüflack für den Purton des Pigmentes in der Helligkeit L* von 54 bis 65 CIELAB-Einheiten, in der Sättigung C* von 38 bis 65 CIELAB-Einheiten mit einem Rotanteil a* von 8 bis 15 CIELAB-Einheiten, einem Gelbanteil von 37 bis 55 CIELAB-Einheiten und einer Hitzebeständigkeit für mindestens 5 Minuten größer als 220°C in Polyethylen.

Der Gelbanteil b* der erfindungsgemäßen Eisenoxid-Pigmente beträgt vorzugsweise 37 bis 53 CIELAB-Einheiten, der Rotanteil vorzugsweise 8 bis 14 CIELAB-Einheiten.

Die Hitzebeständigkeit der erfindungsgemäßen Eisenoxid-Pigmente ist für mindestens 5 Minuten vorzugsweise größer als 230°C, insbesondere größer als 240°C, besonders bevorzugt größer als 250°C und in einer speziellen Ausführungsform sogar größer als 260°C.

Der Silking-Index der erfindungsgemäßen Eisenoxid-Pigmente ist vorzugsweise kleiner als 3, insbesondere kleiner als 2.

Das Schüttgewicht der erfindungsgemäßen Eisenoxid-Pigmente beträgt vorzugsweise mehr als 0,5 t/m$^3$, insbesondere mehr als 0,6 t/m$^3$.

Die erfindungsgemäßen Eisenoxid-Pigmente enthalten vorzugsweise Elemente ausgewählt aus der 3. und 4. Hauptgruppe des Periodensystems insbesondere Aluminium-, Gallium-, Silizium- oder Germanium-Verbindungen, insbesondere 0,3 bis 15 Gew.-%, besonders bevorzugt 0,5 bis 10 Gew.-% Aluminiumverbindungen, berechnet als $Al_2O_3$.

Ein weiterer Gegenstand der vorliegenden Erfindung ist ein Verfahren zur Herstellung der erfindungsgemäßen Eisenoxidgelb-Pigmente in einem Eisen auflösenden Prozeß durch Oxidation von metallischem Eisen mit Nitrobenzol im sauren Medium, dadurch gekennzeichnet, daß die Reaktion in Gegenwart von Verbindungen der Elemente ausgewählt aus der 3. und 4. Hauptgruppe des Periodensystems, vorzugsweise Aluminium-Verbindungen, durchgeführt wird.

Der Anteil der Aluminiumverbindungen wird vorzugsweise so gewählt, daß im fertigen Eisenoxid-Pigment 0,3 bis 15 Gew.-%, insbesondere 0,5 bis 10 Gew.-% Aluminiumverbindungen, berechnet als $Al_2O_3$, enthalten sind.

Als Aluminiumverbindung wird vorzugsweise ein wasserlösliches Aluminiumsalz, insbesondere Aluminiumchlorid, eingesetzt.

Anhand der nachfolgenden Beispiele soll die Herstellung der farbreinen, Silkingarmen, hitzestabilen Eisenoxidgelb-Pigmente beispielhaft beschrieben werden, wobei der Fachmann die Wahl der technischen Aggregate oder der zusätzlichen EinsatzStoffe je nach Bedarf variieren kann.

Die in den nachfolgenden Beispielen angeführten Teile und Prozente beziehen sich auf das Gewicht, soweit nicht anders vermerkt.

**Messung des Purtons**

Die farbliche Auswertung der erfindungsgemäß erhaltenen Pigmente erfolgt in ®Alkydal F 48 (Alkydharz der Fa. Bayer AG) bei einer Pigmentvolumenkonzentration von 10%.

Alkydal F 48 ist ein mittelöliges, lufttrocknendes Alkydharz auf Basis trocknender pflanzlicher Fettsäuren, in Testbenzin / Xylol 38: 7 (mit nichtflüchtigem Anteil ca. 55 %),
Ölgehalt/Triglycerid im nichtflüchtigen Anteil: ca. 48 %,
Phthalsäureanhydrid im nichtflüchtigen Anteil: ca. 26 %,

Zusammensetzung eines typischen Lackes:

95,26 % Alkydal F 48 in Testbenzin/Xylol (38/7),

0,78 % 2-Butanoxim 55 %ig in Testbenzin (Hautverhinderungsmittel),

1,30 % organisches Calciumsalz in Xylol (mit 4 % Ca) ®Octa Soligen Calcium 4 (Benetzungsmittel, Borchers AG),

0,22 % organisches Kobaltsalz in Xylol (mit 6% Co) ®Octa Soligen Kobalt 6 (Trockenstoff, Borchers AG),

0,87 % organisches Zirkonsalz in Xylol (mit 6 % Cr) ®Octa-Soligen Zirkonium 6 (Hilfs-Trockenstoff, Brochers AG),

1,57 % Glykolsäurebutylester (Verlaufsverbesserer).

Die Komponenten werden mit einem Labor-Schnellrührer zum fertigen Lack vermischt. Verwendet wird eine Teller-Farbenausreibmachine (Muller), wie in DIN EN ISO 8780-5 (April 1995) beschrieben. Zur Anwendung kommt ein ®Engelsmann Jel 25/53 Muller mit einem wirksamen Tellerdurchmesser von 24 cm. Die Drehzahl des unteren Tellers beträgt ca. 75 min$^{-1}$. Durch das Eigengewicht des oberen Tellers und eines 2,5 kg Zusatzgewichtes auf dem Belastungsbügel beträgt die Kraft zwischen den Tellern ca. 0,5 kN. Es werden 0,3 g Pigment und 2,00 g Lack in einer Stufe zu 100 Umdrehungen nach dem in DIN EN ISO 8780-5 ( April 1995) Abschnitt 8.1 beschriebenen Verfahren dispergiert. Der Muller wird geöffnet und der Lack zügig auf dem unteren Teller außerhalb des Mittelpunktes gesammelt. Anschließend werden weitere 2,00 g Lack zugesetzt und die Teller zusammengeklappt. Nach zwei Stufen zu 50 Umdrehungen ohne Zusatzgewicht ist die Präparation beendet.

Der pigmentierte Lack wird mit einem geeigneten Filmzieher (Spalthöhe mindestens 150 μm, höchstens 250 μm) auf einem nicht saugfähigen Karton aufgestrichen. Der lackierte Karton (Aufstrich) wird dann mindestens 12 h bei Raumtemperatur an einem staubarmen Ort getrocknet. Vor der Farbmessung wrid der Aufstrich eine Stunde bei ca. 65°C getrocknet und abgekühlt.

Es wird ein Spektrophotometer ("Farbmeßgerät") mit einer Ulbrichtkugel und mit der Meßgeometrie d/8 ohne Glanzfalle verwendet. Diese Meßgeometrie ist in ISO 7724/2-1984 (E) Punkt 4.1.1, in DIN 5033 Teil 7 (Juli 1983) Punkt 3.2.4 und in DIN 53236 (Januar 1983) Punkt 7.1.1 beschriben. Zur Anwendung kommt ein ®Dataflash 2000 Meßgerät der Firma Datacolor International.

Das Farbmeßgerät wird gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmeßgerät hinterlegt, so daß nach Kalibrierung mit dem weißen Arbeitsstandard alle Farbmessungen auf den ideal mattweißen Körper bezogen werden. Die Schwarzpunktkalibrierung wird mit einem schwarzen Hohlkörper des Farbmeßgeräteherstellers ausgeführt.

Die Farbmessung erfolgt unmittelbar nach der Präparation der Prüflinge. Eine möglicherweise vorhandene Glanzfalle ist ausgeschaltet. Die Temperatur von Farbmeßgerät und Prüfling beträgt ca. 25°C ± 5°C.

Der Aufstrich wird so an das Farbmeßgerät gelegt, so daß die Meßöffnung eine mittlere Stelle der Lackschicht abdeckt. Der Aufstrich muß vollständig und plan anliegen. Die Meßöffnung muß vollständig von der Lackschicht bedeckt sein. Anschließend erfolgt die Messung.

Aus dem gemessenen Reflexionsspektrum werden nach den Berechnungsanweisungen in ASTM E 308-1985, Punkt 7 die CIE-Koordinaten L*, a* und b* von 1976 berechnet. Zur Verwendung kommen die Gewichtsfunktionen der Normlichtart C und des 2°-Normalbeobachters von 1931 in ASTM E 308 - 1985, Table 5.6. Der Wellenlängenbereich liegt zwischen 400 nm und 700 nm. Das Wellenlängenintervall beträgt 20 nm. Es wird rechnerisch kein Glanz abgezogen. Die erhaltenen Remissionswerte werden nach DIN 5033, Teil 3 (Juli 1992) in das CIELAB-Farbdatensystem umgerechnet.

**Silking-Index**

Präparation in einer Alkydharzpaste zur Messung des Silking-Indexes

Das Pigment wird mit einer Teller-Farbenausreibmaschine (Muller) in einem nichttrocknenden Prüfbindemittel präpariert. Das Prüfbindemittel (Paste) besteht aus zwei Komponenten:

Komponente 1

Komponente 1 ist ein Alkydharz-Bindemittel auf Basis Leinöl und Phtalsäureanhydrid. Es entspricht den Spezifikation, die in den Normen DIN EN ISO 787-24:1995, ISO 787-25:1993 und DIN 55 983 (Dezember 1983) als Anforderungen an ein Prüfbindemittel für Farbpigmente genannt werden. Zur Anwendung kommt das Produkt ®Sacolyd L 640 (Krems Chemie), ehemals ®Alkydal 64 (Bayer AG).

Komponente 2

Komponente 2 ist ein rheologisches Additiv, das zum Erreichen eines thixotropen Verhaltens der Paste zugesetzt wird. Zur Anwendung kommt ein pulverförmiges, modifiziertes hydriertes Rizinusöl ®Luvothix HT (Lehmann & Voss & Co) in der Konzentration von 5,0%.

Das Luvothix HT wird in dem Sacolyd L 640 bei 75 bis 95°C gelöst. Die abgekühlte, stichfeste Masse wird einmal über ein Dreiwalzwerk abgegeben. Damit ist die Paste fertiggestellt.

Zur Herstellung der Pigment-Paste wird ein Teller-Farbenausreibmaschine (Muller) verwendet, wie in DIN EN ISO 8780-5 (April 1995) beschrieben. Zur Anwendung kommt ein ®Engelsmann Jel 25/53 Muller mit einem wirksamen Tellerdurchmesser von 24 cm. Die Drehzahl des unteren Tellers beträgt ca. 75 min$^{-1}$. Durch das Eigengewicht des oberen Tellers und eines 2,5 kg Zusatzgewichtes auf dem Belastungsbügel beträgt die Kraft zwischen den Tellern ca. 0,5 kN. Es werden 0,40 g Pigment und 5,00 g Paste in drei Stufen zu je 25 Umdrehungen nach dem in DIN EN ISO 8780-5 (April 1995) Abschnitt 8.1 beschriebenen Verfahren dispergiert.

Anschließend wird die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen so daß ein glatte Oberfläche entsteht. Die Rakel wird dabei in einer Richtung mit einer Geschwindigkeit von ca. 3 bis 7 cm/s bewegt. Durch diese Präparation werden eventuell im Pigment vorhandene nadelförmige Teilchen in Richtung der Rakelung ausgerichtet. Die glatte Oberfläche wird innerhalb weniger Minuten gemessen.

Die zur Silking-Messung verwendete Meßgeometrie 8/d ist in ISO 7724/2-1984 (E) Punkt 4.1.1, in DIN 5033 Teil 7 (Juli 1983) Punkt 3.2.4 und in DIN 53 236 (Januar 1983) Punkt 7.1.1 beschrieben. Zur Anwendung kommt ein ®Perkin Elmer Lambda 19 mit einer ®Labsphere Ulbrichtkugel mit 15 cm Durchmesser.

Zur Messung wird ein handelsübliches Folien-Linearpolarisationsfilter ausreichender Größe außerhalb der Integrationskugel in den Beleuchtungsstrahlengang der Probe in definierter Lage eingebracht, so daß die Richtung des E-Vektors (Elektrisches Feld) des durchgelassenen Lichtstrahls im Meßfleck (Probenöffnung) bekannt ist. Der Filter hat einen Polarisationsgrad >99%. Der Referenzstrahlengang bleibt unverändert ohne Filter.

Die Referenz-Meßöffnung der Integrationskugel wird mit einem diffus streuenden, weißen Opalglasstandard verschlossen. Eine Glanzfalle wird nicht verwendet.

Nach der Installation des Filters wird ein weiterer weißer Opalglasstandard (Arbeitsstandard) an die Probenöffnung angelegt und das Meßgerät kalibriert. Der Arbeitsstandard erfüllt die in ISO 7724/2-1984 (E) Abschnitt 8.3 beschriebenen Anforderungen. Die Reflexionsdaten des Arbeitsstandards gegen einen ideal mattweißen Körper werden im Computer hinterlegt, so daß nach Kalibrierung mit dem weißen Arbeitsstandard alle Farbmessungen auf den ideal mattweißen Körper bezogen werden. Der Dunkelstrom im Schwarzpunkt wird mit einem schwarzen Hohlkörper gemessen, im Computer gespeichert und bei der Kalibrierung vom Meßprogramm berücksichtigt.

Die Messung erfolgt unmittelbar nach der Präparation der Prüflinge. Die Temperatur von Farbmeßgerät (Reflexionsspektrometer) und Probe beträgt ca. 25°C +/-5°C.

Die Probe wird in zwei senkrecht aufeinanderstehenden Positionen bezogen auf das Polfilter gemessen:

Messung $Y_{1\parallel}$: Die Pigmentteilchen sind mit ihrer längsten Achse weitgehend parallel zum E-Vektor der Beleuchtung ausgerichtet. Die Abziehrictung der Rakel liegt parallel zum E-Verktor.

Messung $Y_{2\perp}$: Die Pigmentteilchen sind mit ihrer längsten Achse weitgehend senkrecht zum E-Vektor der Beleuchtung ausgerichtet. Die Abziehrichtung der Rakel und der E-Vektor stehen senkrecht aufeinander.

Eine Vorrichtung zur Drehung der Prove um 90° ist hilfreich, aber nicht unbedingt notwendig, wenn an der Probenöffnung geeignete Markierungen angebracht sind.

Aus den gemessen Reflexionsspektren werden nach den Berechnungsanweisungen in ASTM E 308 - 1995, Punkt 7 die Normfarbwerte Y berechnet. Zur Verwendung kommen die Gewichtungsfunktionen der Normlichtart C und des 2°-Normalbeobachters von 1931 in Table 5.6. Der Wellenlängenbereich liegt zwischen 400 nm und 700 nm. Das Wellenlängenintervall beträgt 20 nm. Es wird rechnerisch kein Glanz abgezogen.

Der Silking-Index SI wird dann wie folgt aus den Normfarbwerten Y berechnet:

$$SI = (1 - Y1_{\parallel}/Y_{2\perp})*100$$

Das Ergebnis wird auf eine ganze Zahl gerundet. Ein SI von nahe Null belegt die Abwesenheit eines Silking-Effektes, während ein SI > ca. 5 ein silkendes Pigment anzeigt.

## Hitzebeständigkeit

Die Bestimmung der Hitzebeständigkeit kann gemäß den nachfolgend beschriebenen Verfahren erfolgen.

**Verfahren A:**

Auf einfache Weise kann man die Hitzebeständigkeit des Gelbpigments feststellen, indem man das Pigment im Umlufttrockenschrank einer Hitzebehandlung unterzieht. Die Probenmenge im Porzellanschälchen soll 5 g betragen, die Verweilzeit bei der Prüftemperatur 30 min. Als niedrigste Prüftemperatur wird 160°C gewählt und die Prüftemperatur in Intervallen von 10°C gesteigert. Es wird die Temperatur ermittelt, bei der das zu prüfende Pigment erstmals einen deutlichen Farbumschlag nach Rot zeigt. Zusätzlich kann eine Farbauswertung aller wärmebehandelten Proben erfolgen. Als Bezug wählt man die getrocknete Probe des beschichteten Gelbpigments. Die Farbtöne der wärmebehandelten Proben werden im Bindemittel Alkydal F 48 bei einer Pigmentvolumenkonzentration von 10 % gemäß DIN 6174 (equivalent ISO/DIN 7724, 1-3 drafts) ermittelt. Da ein Farbumschlag des Gelbpigments nach Rot unerwünscht ist, berechnet man gemäß DIN 6174 die Farbabstände Da* (a* - Rotanteil) der Pigmentproben gegen den Bezug (getrocknete Probe des beschichteten Pigments). Die auf 10°C gerundete Prüftemperatur bei der sich für das Pigment ein Farbabstand Da* = 3 zum Bezug ergibt, gibt die Hitzebeständigkeit des Gelbpigments an.

**Verfahren B:**

Weiterhin kann man zur Prüfung der Hitzebeständigkeit des Gelbpigments DIN 53 772 heranziehen: Prüfung von Farbmitteln in thermoplastischen Kunststoffen. Bestimmung der Hitzebeständigkeit durch Spritzgießen. Die Bestimmung der Hitzebeständigkeit erfolgt in Anlehnung an DIN 53772.

10 g des zu prüfenden Gelbpigments werden mit 1 kg ungefärbtem Polyethylen-Granulat hoher Dichte, einem thermoplastischen Kunststoff ®Vestolen A 6016 (Chemische Werke Hüls AG), in einer Glasflasche auf einem Rollenbock 20 min. gemischt. Die Mischung wird anschließend auf einem Doppelschneckenextruder mit Granuliervorrichtung zu einem gleichmäßig durchgefärbten Prüfgranulat verarbeitet. Das Prüfgranulat wird 4 h bei 70°C getrocknet.

Die Herstellung der eingefärbten, plättchenförmigen Probekörper zur Beurteilung der Hitzebeständigkeit (plane Oberfläche, mindestens 2,5 mm dick, für Farbmessung geeignet) erfolgt mit einer Schneckenspritzgießmaschine Typ ®Arburg 200 Allraunder, Firma Arburg, Loßburg, mit entsprechendem Spritzgießwerkzeug. Der Inhalt des Schnekkenkolbens ergibt 5 Probekörper. Die Spritzgießmaschine besitzt ein elektrisches Temperaturmeßgerät mit Temperaturfühler zur Messung der Temperatur in der Schmelze. Die Maschine wird mit Prüfgranulat gefüllt und auf 200°C aufgeheizt. Dabei werden 12 Platten (Probekörper) gespritzt und verworfen. Bei Erreichen von 200°C werden 5 Platten gespritzt und als Probekörper 1 bis 5 numeriert. Sie dienen als Vergleichs- bzw. Bezugsproben für die folgenden Temperaturstufen. Die Prüfoder Spritztemperatur wird anschließend in Intervallen von 20°C (bzw. 10°C) erhöht. Während des Hochheizens auf die jeweils nächste Prüftemperatur werden 6 Platten gespritzt und verworfen. Ist die Prüftemperatur erreicht, wird der Spritzzyklus unterbrochen und die Schmelze und damit auch das in ihr enthaltene Eisenoxidgelb-Pigment 5 min. bei dieser Temperatur belastet. Anschließend werden 5 Platten (Probekörper) gespritzt und numeriert. Dann wird in gleicher Weise die nächst höhere Prüftemperatur eingestellt und der Vorgang (5 min. Temperaturbelastung, danach Spritzen von 5 Probekörpern) wiederholt. Die Prüftemperatur wird so lange um 20°C (bzw. 10°C) erhöht, bis an den Probekörpern deutliche Schlierenbildung oder ein Farbumschlag nach Rot beobachtet werden kann. Zur Beurteilung der Hitzebeständigkeit werden die Platten 2 und 3 herangezogen und mit den bei 200°C gespritzten Probekorpern verglichen.

Eine einfache visuelle Beurteilung ist möglich. Es wird die höchstmögliche Spritztemperatur ermittelt, bei der die Probeplatten keine Schlieren aufweisen und im Vergleich mit den bei 200°C gespritzten Probekörpern keinen Farbtonumschlag nach Rot zeigen. Nach DIN 53 772 (Bestimmung der Hitzebeständigkeit durch Spritzgießen) werden die Probekörper farbmetrisch nach DIN 53 236 und DIN 6174 auf einen Farbunterschied gegenüber den bei der tiefsten Prüftemperatur (200°C) hergestellten Probekörpern geprüft. Nach DIN 53 722 ist die Prüftemperatur, bei der ein Farbunterschied von dE*a b = 3 zwischen den Probekörpern auftritt, die Hitzebeständigkeit des Eisenoxidgelb-Pigments, bezogen auf das Prüfmedium (Polyethylen, Vestolen A 6016). Die Farbabstände der Probekörper zum Bezug werden in Abhängigkeit von der Prüftemperatur in °C in ein Diagramm eingetragen. Durch graphische Interpolation wird die Prüftemperatur in °C ermittelt, bei der der Farbabstand DE*a b = 3 beträgt, und dieser Wert auf 10°C gerundet. Er gilt nach DIN 53 772 als Maß für die Hitzebeständigkeit des Pigments in dem gewählten Kunststoff.

**Verfahren C:**

Ebenso kann die Hitzebeständigkeit unter Anwendung des Verfahrens in Anlehnung an DIN 53 775 Teil 2, Oktober 1990, Prüfung von Farbmitteln in PVC-Formmassen bestimmt werden.

**Bestimmung der Ölzahl nach ISO 787 Teil 5**

Arbeitsgeräte:          Analysenwaage
                        Glasplatte 300 x 400 mm
                        Messerspatel
                        10 ml Bürette

Reagenzien:             Lackleinöl mit einer Säurezahl von 5,0-7,0 mg/9 g KOH

Probenpräparation:      Die genau eingewogene Probenmenge

    a) Rot-, Schwarz-, Braunpigmente: 4 g,
    b) Gelbpigmente: 2 g

wird auf die Glasplatte gegeben. Aus der Bürette wird langsam und tropfenweise das Lackleinöl zugegeben. Nach jeder Zugabe wird das Öl mit dem Messerspatel in das Pigment eingerieben. Die Zugabe des Öls wird so lange fortgesetzt, bis eine kittartige Paste entstanden ist. Die Paste sollte sich ohne zu reißen, zu krümmeln oder Schlieren auf der Glasplatte zu bilden, wieder verteilen lassen. Die Zugabe des Öls sollte ca. 10 bis 15 min betragen. Die verbrauchte Ölmenge wird notiert.

Berechnung:

    ÖZ = Ölzahl der Probe: Ölverbrauch in g pro 100 g Pigment
    Dichte des Öls: 0,93 g/ml
    V = verbrauchte Ölmenge in g
    m = Masse der Probe in g

$$\ddot{O}Z = \frac{0,93 \times 100 \times V}{m}$$

**Schüttgewicht:**

Arbeitsgeräte:

    Waage, Genauigkeit 0,1g
    Meßzylinder 500 ml
    Sieb, Maschenweite 500 μ

Durchführung:

Eine ausreichende Menge Pigment für 500 ml gesiebtes Material wird durch ein 500 μm-Sieb abgesiebt. Es werden davon 500 ml in einen vorher gewogenen Meßzylinder gegeben und ausgewogen. Der Vorgang soll ruckfrei und ohne Erschütterungen erfolgen. Die Bestimmung wird doppelt ausgeführt. Das Ergebnis wird aus den Einzelwerten durch Mittelwertbildung berechnet.

Berechnung:

$$Rho = M / 500$$

Rho = Schüttdichte in g/ml
500 = Volumen in ml
M = Masse in g

Eisenoxid-Pigmente, die durch Reaktion von metallischen Eisenrohstoffen mit Nitrobenzol erhalten werden, werden gemäß dem Lauxverfahren hergestellt, das in den Patenten DE-C 463 773, DE-C 464 561 und DE-C 515 758 beschrieben ist. Durch Variation der zuätzlichen Einsatzstoffe kann der Fachmann die im Lauxverfahren erhältlichen Eisenoxid-Phasen ($\alpha$-FeOOH, $\gamma$-Fe$_2$O$_3$, $\alpha$-Fe$_2$O$_3$ oder Fe$_3$O$_4$) bestimmen. Entsprechend der in den Beispielen in DE-C 463 773 beschriebenen Verfahrensweise werden in mit Rührern ausgestatteten Behältern und Kesseln folgende Stoffe umgesetzt:

| | Ansatz ( Vorlage ) | | | | | Charge ( Dosierzeitraum ) | | | | | | | |
|---|---|---|---|---|---|---|---|---|---|---|---|---|---|
| | Aluminium-chlorid-Lösung | | Wasser | Temperatur | Stahl-granalien | Nitrobenzol | Stahlgranalien | | Nitrobenzol | | Verdünnungswasser | | Gußspäne | |
| | Menge | Gehalt g/l | | | | | Menge | Dosierzeit* min | Menge | Dosierzeit* min | Menge | Dosierzeit* min | Menge | Dosierzeit* min |
| 1 | 410 ml | 300 | 182 ml | Raum-temperatur | 470 g | 87 ml | 374 g | 120-210 | 710 ml | 0-300 | 610 ml | 60-120 | 70 g | 300-305 |
| 2 | 410 ml | 300 | 182 ml | Raum-temperatur | 470 g | 87 ml | 374 g | 120-210 | 710 ml | 0-300 | 610 ml | 60-120 | 70 g | 300-305 |
| 3 | 410 ml | 300 | 182 ml | Raum-temperatur | 470 g | 87 ml | 374 g | 120-210 | 710 ml | 0-300 | 610 ml | 60-120 | 70 g | 300-305 |
| 4 | 250 ml | 160 | - | Raum-temperatur | 50 g | 95 ml | 380 g | 0-240 | 240 ml | 0-120 | 600 ml | 150-230 | | |
| 5 | 250 ml | 160 | - | Raum-temperatur | 50 g | 95 ml | 380 g | 0-240 | 240 ml | 0-120 | 600 ml | 150-230 | | |
| 6 | 6600 ml | 300 | 5020 ml | 50°C | 10800 g | 2140 ml | 6000 g | 90-150 | 11200 ml | 0-150 | 15000 ml | 60-150 | - | |
| 7 | 4420 ml | 300 | 7200 ml | 50°C | 10800 g | 2140 ml | 6000 g | 90-150 | 11200 ml | 0-150 | 15000 ml | 60-150 | - | |
| 8 | 4710 l | 300 | 2090 l | 50°C | 5400 kg | 600+600 kg | 4000 kg | 150-225 | 9800 kg | 0-340 | 7000 l | 90-150 | 1400 kg | 310-360 |
| 9 | 4710 l | 300 | 2090 l | 47°C | 5400 kg | 300+600 kg | 4800 kg | 85-160 | 10100 kg | 0-295 | 7000 l | 40-125 | 1000 kg | 295-335 |
| 10 | 4710 l | 300 | 2090 l | 45°C | 5400 kg | 300+600 kg | 5000 kg | 85-170 | 10100 kg | 0-285 | 7000 l | 45-135 | 1000 kg | 285-325 |

* Dosierbeginn bis Dosierende

t: 0 min = Erreichen der Reduktionstemperatur 97°C = Siedetemperatur, Rückfluß. Bei Versuchen Nr. 8 bis 10 15 min später.

EP 0 918 075 B1

# EP 0 918 075 B1

**<u>Durchführung der Versuche 1 bis 5</u>**

**Beschreibung der Reaktionsapparatur:**

| | |
|---|---|
| Geräte: | 2 l Planschlifftopf mit Planschliffdeckel mit 4 NS 29 Schliffen, Dichtung für den Planschliff aus Centelen, Klemmring, Intensiv-Rückflußkühler, Claisenaufsatz, PTFE-Faltenbalg, 2 Stück ®ProMinent - Dosierpumpen, (Fa. ProMinent, Heidelberg) für Nitrobenzol und Trinkwasser mit 500 ml Tropftrichter als Pumpenvorlage, LABC - Universalrührführung, 3 Stufenbalken mit ®Teflon-Wischer, 75° angestellt, Rührerantrieb (IKA, RW 27 oder RW 28, Fa. IKA, Staufen), ®Cerarkochfeld (Schott Geräte GmbH, Hofheim) mit Ölbad (Siliconöl P300, BAYER AG), Temperaturregler (Julabo Labortechnik, Seelbach) mit Pt 100-Meßfühler, PTFE-Bodenstütze für den Planschlifftopf im Ölbad. |
| Aufbau: | Der Dichtungsring wird auf den Planschlifftopf aufgelegt, der Rührer eingesetzt und der Deckel mit dem Klemmring befestigt. Die NS-Schliffe werden mit Teflon-Hülsen versehen und die Rührführung angebracht. Beim Zusammenbau ist darauf zu achten, daß die Planschliffe exakt übereinander liegen und der Rührer zentriert ist. Die Apparatur wird in das Ölbad auf die PTFE-Bodenstützen gestellt, (Ölbadhöhe 10 cm über der Bodenstütze), ein Schliff nach vorne, Apparatur 2-fach geklammert. Der Rührer wird befestigt, Bodenabstand des untersten Rührerflügel 2 bis 3 mm. Der Pt 100-Meßfühler wird in das Ölbad eingebracht, Fühlerspitze in Höhe des Planschlifftopfbodens. Abschließend wird der Kühler mit dem Claisenaufsatz und dem PTFE-Faltenbalg aufgesetzt. Die Dosierspritzen für Nitrobenzol und Trinkwasser werden während des Versuchverlaufs angebracht. |

**Durchführung:**

| | |
|---|---|
| Vorbereitung: | Die laut Tabelle benötigten Reagenzien Aluminiumchlorid-Lösung, Eisen, Wasser und Nitrobenzol) werden bereitgestellt und die Pumpenvorlagen gefüllt. Als Stahlgranalien werden Granalien der Fa. Vulkan, Hattingen eingesetzt mit einem Gehalt an C und Si von jeweils < 1 Gew.-% und einem Anteil von > 40 Gew.-% an Teilchen mit einem Durchmesser von 1 bis 2 mm. Als Gußspäne werden gesiebte Grauguß-Späne mit einem Anteil von > 60 % aus der Siebfraktion 1 bis 2 mm eingesetzt. Das Kühlwasser wird eingestellt. Unter Rühren mit 250 bis 400 Upm wird die Vorlage in der angegebenen Reihenfolge bei Raumtemperatur eingefüllt. Es wird auf die Badtemperatur von 90°C aufgeheizt. |
| Verlauf: | Bei Erreichen der Solltemperatur wird mit der Dosierung laut Rezeptur begonnen. Die Dosierung der Gußspäne/Stahlgranalien während der Charge erfolgt in zehn gleich großen Teilmengen, die alle 10 Minuten hinzugegeben werden. |
| Endpunkt: | Nachdem alle Zugaben abgeschlossen sind läßt man 60 Minuten nachrühren, dann wird der Umsatz des Nitrobenzols zu Anilin geprüft. Dazu entnimmt man mit einem Spatel eine kleine Menge Paste (Rohanilin) und gibt diese in ein 50 ml Becherglas. Die Paste wird mit 5 ml tert.Butylmethylether digeriert. Mit einer Einwegspritze werden ca. 2 ml der Ether-Phase aufgenommen und durch einen PTFE-Einwegfilter in ein GC-Probefläschchen gedrückt. Anschließend wird die Probe chromatographiert. Bei unvollständigem Umsatz muß weiter nachgerührt und/oder zusätzliches Eisen zugegeben werden. |
| Aufarbeitung: | Wenn 100% Umsatz ereicht sind, läßt man die Pigment-Paste abkühlen. 250 bis 300 g der Pigment-Paste werden aus dem Planschlifftopf für die Aufarbeitung entnommen. Das Pigment wird Salz- und Anilin-frei gewaschen, das Rest-Eisen abgesiebt, abgenutscht (filtriert) und getrocknet. |

**Durchführung der Versuche 6 + 7**

Reaktionsbehälter, Nennvolumen 89 l mit:

Getriebemotor stufenlos regelbar,
2 Stufenkreuzbalkenrührer, unteres Blatt 30° angestellt, nach oben fördernd,
Manteldampf-Heizung mit Temperaturregler,
Glaskühler,
ProMinent Dosierpumpe für Nitrobenzol,
ProMinent Dosierpumpe für Betriebswasser,

Vorbereitung:     Die laut Tabelle benötigten Reagenzien Aluminiumchlorid-Lösung, Eisen, Säuren und Wasser werden bereitgestellt und die Pumpenvorlagen gefüllt. Das Kühlwasser wird eingestellt. Als Stahlgranalien und Gußspäne werden die in den Versuchen 1 bis 5 beschriebenen Materialien eingesetzt.
Unter Rühren mit 175 Upm wird die Vorlage in der angegebenen Reihenfolge bei Raumtemperatur eingefüllt. Es wird auf die in der Tabelle angegebene Temperatur aufgeheizt.

Verlauf:     Bei Erreichen der Solltemperatur wird mit der Dosierung laut Rezeptur begonnen. Dazu wird das Eisen, gleich verteilt in 6 Portionen, alle 10 Minuten zugegeben.

Endpunkt:     Nachdem alle Zugaben abgeschlossen sind, läßt man 60 Minuten nachrühren, dann wird der vollständige Umsatz des Nitrobenzols zu Anilin geprüft. Anschließend wird die gewaschene Paste aufgearbeitet wie unter den Versuchen 1 bis 5 beschrieben.

**Durchführung der Versuche 8 bis 10**

In den bei den Versuchen 7 und 8 beschriebenen technischen Einrichtungen werden die Versuche unter Einsatz der in der Tabelle angegebenen Mengen in der zuvor beschriebenen Weise ausgeführt.

Tabelle 2:

| Stoffdaten der Beispiele und Vergleichsbeispiele | | | | | | | | | | |
|------|------|------|------|------|----------------|--------------|----------------------|-------------------------|---------|---------|
| Probe | L* | a* | b* | C* | SI S-Lsg-index | Ölzahl [g] | Schütt-gew. [g/ml] | Hitze-best.* [°C] B/A | Al- Geh. | Fe-Geh. |
| 1 | 58,2 | 12,0 | 49,8 | 50,9 | 2 | 27 | 0,62 | 250 | 1,6% | 59,0% |
| 2 | 58,5 | 11,4 | 49,5 | 50,5 | 1,6 | | 0,62 | 250 | 1,6% | |
| 3 | 58,8 | 11,3 | 49,5 | 50,5 | 2,2 | | 0,64 | 250 | 1,7% | |
| 4 | 60,1 | 10,6 | 50,7 | 51,5 | 3,3 | | 0,51 | 250 | 1,2% | 59,4% |
| 5 | 60,1 | 10,7 | 50,7 | 51,7 | 3,7 | | 0,63 | 250 | 1.2% | |
| 6 | 59,0 | 10,7 | 49,3 | 50,2 | 1,4 | | 0,61 | 250 | 1,6% | |
| 7 | 57,0 | 12,2 | 49,4 | 50,6 | 0,4 | | 0,56 | 250 | 1,0% | 59,7% |
| 8 | 59,3 | 11,1 | 50,0 | 50,9 | 2,4 | | 0,75 | 260 | 1,7% | |
| 9 | 59,2 | 11,9 | 49,2 | 50,1 | 4,1 | | 0,56 | 260/230 | 1,6% | |
| 10 | 59,6 | 10,6 | 49,4 | 50,2 | 2,6 | | 0,60 | 260 | 1,7% | |
| A | 58,4 | 10,8 | 43,6 | 44,5 | 14,5 | 34 | 0,44 | 220 | 0,2% | |
| B | 51,7 | 9,0 | 35,1 | 36,0 | 4,1 | | 0,53 | 220 | 1,2% | |
| C | 58,8 | 10,8 | 47,6 | 48,5 | 1,9 | | 0,56 | 220/210 | 0,25% | |
| D | 62,0 | 9,6 | 48,5 | 49,2 | 7,7 | | 0,51 | 240 | <0,1% | |

* Bestimmung der Hitzebeständigkeit in thermoplastischem Kunststoff ®Vestolen A 6016

Tabelle 2: (fortgesetzt)

| Stoffdaten der Beispiele und Vergleichsbeispiele | | | | | | | | | | |
|---|---|---|---|---|---|---|---|---|---|---|
| Probe | L* | a* | b* | C* | SI S-Lsg-index | Ölzahl [g] | Schütt-gew. [g/ml] | Hitze-best.* [°C] B/A | Al- Geh. | Fe-Geh. |
| E | 66,8 | 16,4 | 48,15 | 50,8 | 0,8 | | | | | 7,8% |
| A = ®Bayferrox 420, B = ®Bayferrox 415, C = ®Bayferrox 915 (BAYER AG); D = ®MAPICO 1000 HRA (Columbian Co.) E= Mischung 87,5 % ®Lichtgelb 3 R (Bayer AG) / 12,5 % ®Bayferrox 420 (Bayer AG) | | | | | | | | | | |

* Bestimmung der Hitzebeständigkeit in thermoplastischem Kunststoff ®Vestolen A 6016

**Patentansprüche**

1. Eisenoxidgelb-Pigmente mit einem Fe-Gehalt größer als 58 Gew.-%, mit einem gemäß experimentellem Teil vorliegender Beschreibung bestimmten Silking-Index kleiner als 5 und Farbwerten bei einer Pigmentvolumen-Konzentration von 10 % im Prüflack für den Purton des Pigmentes in der Helligkeit L* von 54 bis 65 CIELAB-Einheiten, in der Sättigung C* von 38 bis 65 CIELAB-Einheiten mit einem Rotanteil a* von 8 bis 15 CIELAB-Einheiten, einem Gelbanteil von 37 bis 55 CIELAB-Einheiten und einer Hitzebeständigkeit für mindestens 5 Minuten größer als 220°C in Polyethylen.

2. Eisenoxidgelb-Pigmente gemäß Anspruch 1, **dadurch gekennzeichnet**, der Gelbanteil B* 37 bis 53 CIELAB-Einheiten und der Rotanteil 8 bis 14 CIELAB-Einheiten beträgt.

3. Eisenoxidgelb-Pigmente gemäß Anspruch 1, **dadurch gekennzeichnet**, die Hitzebeständigkeit für mindestens 5 Minuten größer als 260°C ist.

4. Eisenoxidgelb-Pigmente gemäß Anspruch 1, **dadurch gekennzeichnet**, der Silking-Index kleiner als 3 ist.

5. Eisenoxidgelb-Pigmente gemäß Anspruch 1, **dadurch gekennzeichnet**, das Schüttgewicht mehr als 0,5 t/m3 beträgt.

6. Eisenoxidgelb-Pigmente gemäß Anspruch 1, **dadurch gekennzeichnet**, 0,3 bis 15 Gew.-%, berechnet als Al2O3, Aluminiumverbindungen enthalten sind.

7. Verfahren zur Herstellung der Eisenoxidgelb-Pigmente gemäß Anspruch 1 in einem Eisen auflösenden Prozeß unter Oxidation von metallischem Eisen mit Nitrobenzol im sauren Medium, **dadurch gekennzeichnet**, die Reaktion in Gegenwart von Verbindungen der Elemente ausgewählt aus der 3. und 4. Hauptgruppe des Periodensystems durchgeführt wird.

8. Verwendung der erfindungsgemäßen Eisenoxidgelb-Pigmente gemäß Anspruch 1 in Pigment verarbeitenden Prozessen, bei denen Temperaturen größer als 220°C auftreten.

9. Verwendung der Eisenoxidgelb-Pigmente gemäß Anspruch 1 zur Einfärbung thermoplastischer Kunststoffe.

10. Verwendung der Eisenoxidgelb-Pigmente gemäß Anspruch 1 zur Einfärbung von Laminatpapier.

11. Verwendung der Eisenoxidgelb-Pigmente gemäß Anspruch 1 zur Einfärbung von Baustoffen.

12. Verwendung der Eisenoxidgelb-Pigmente gemäß Anspruch 1 zur Einfärbung von Lacken.

13. Verwendung der Eisenoxidgelb-Pigmente gemäß Anspruch 1 zur Einfärbung von Pulverlacken.

14. Verwendung der Eisenoxidgelb-Pigmente gemäß Anspruch 1 zur Einfärbung von Einbrennlackierungen.

**Claims**

1. Yellow iron oxide pigments having an Fe content of more than 58% by weight, having a silking index, determined in accordance with the experimental section of the present description, of less than 5, and having colour values, at a pigment volume concentration of 10% in the test varnish, for the full shade of the pigment, of from 54 to 65 CIELAB units in the lightness L*, from 38 to 65 CIELAB units in the saturation C*, with a red component a* of from 8 to 15 CIELAB units and a yellow component b* of from 37 to 55 CIELAB units, and having a heat resistance for at least 5 minutes of more than 220°C in polyethylene.

2. Yellow iron oxide pigments according to Claim 1, **characterized in that** the yellow component b* is from 37 to 53 CIELAB units and the red component a* is from 8 to 14 CIELAB units.

3. Yellow iron oxide pigments according to Claim 1, **characterized in that** the heat resistance for at least 5 minutes is more than 260°C.

4. Yellow iron oxide pigments according to Claim 1, **characterized in that** the silking index is less than 3.

5. Yellow iron oxide pigments according to Claim 1, **characterized in that** the bulk density is more than 0.5 t/m$^3$.

6. Yellow iron oxide pigments according to Claim 1, **characterized in that** they contain from 0.3 to 15% by weight, calculated as $Al_2O_3$, of aluminium compounds.

7. Process for preparing the yellow iron oxide pigments according to Claim 1 in an iron dissolution procedure with oxidation of metallic iron using nitrobenzene in an acidic medium, **characterized in that** the reaction is conducted in the presence of compounds of elements selected from main groups 3 and 4 of the periodic system.

8. Use of the yellow iron oxide pigments according to Claim 1 in pigment-processing operations where temperatures of more than 220°C occur.

9. Use of the yellow iron oxide pigments according to Claim 1 for colouring thermoplastics.

10. Use of the yellow iron oxide pigments according to Claim 1 for colouring laminated paper.

11. Use of the yellow iron oxide pigments according to Claim 1 for colouring building materials.

12. Use of the yellow iron oxide pigments according to Claim 1 for colouring coating materials.

13. Use of the yellow iron oxide pigments according to Claim 1 for colouring powder coating materials.

14. Use of the yellow iron oxide pigments according to Claim 1 for colouring baking-enamel coatings.


**Revendications**

1. Oxydes de fer pigmentaires jaunes à une teneur en Fe supérieure à 58 % en poids, un indice de chatoiement, déterminé comme indiqué dans la partie expérimentale de la présente description, inférieur à 5 et des valeurs colorimétriques à une concentration en volume de 10 % du pigment dans la peinture pour essai du ton pur du pigment de 54 à 65 unités CIELAB pour la vivacité L*, de 38 à 65 unités CIELAB pour la saturation C* avec une fraction de rouge a* de 8 à 15 unités CIELAB, une fraction de jaune de 37 à 55 unités CIELAB et une stabilité à la chaleur d'au moins 5 min à une température supérieure à 220°C dans le polyéthylène.

2. Oxydes de fer pigmentaires jaunes selon revendication 1 **caractérisés en ce que** la fraction de jaune B* est de 37 à 53 unités CIELAB et la fraction de 8 à 14 unités CIELAB.

3. Oxydes de fer pigmentaires jaune selon revendication 1 **caractérisés en ce que** la stabilité à la chaleur est d'au moins 5 min à une température supérieure à 260°C.

4. Oxydes de fer pigmentaires jaunes selon revendication 1 **caractérisés en ce que** l'indice de chatoiement est inférieur à 3.

**5.** Oxydes de fer pigmentaires jaunes selon revendication 1 **caractérisés en ce que** la densité apparente est supérieure à 0,5 t/m$^3$.

**6.** Oxydes de fer pigmentaires jaunes selon revendication 1 **caractérisés en ce qu'**ils contiennent 0,3 à 15 % en poids de dérivés de l'aluminium, exprimé en $Al_2O_3$.

**7.** Procédé pour la préparation des oxydes de fer pigmentaires jaunes selon revendication 1, dans des opérations de dissolution du fer avec oxydation de fer métallique par le nitrobenzène en milieu acide, **caractérisé en ce que** la réaction est exécutée en présence de dérivés d'éléments choisis dans le 3$^{ème}$ et le 4$^{ème}$ groupe principal de la Classification Périodique.

**8.** Utilisation des oxydes de fer pigmentaires jaunes selon revendication 1, dans des opérations dans lesquelles on utilise des pigments à des températures supérieures à 220°C.

**9.** Utilisation des oxydes de fer pigmentaires jaunes selon revendication 1, pour la coloration de résines synthétiques thermoplastiques dans la masse.

**10.** Utilisation des oxydes de fer pigmentaires jaunes selon revendication 1, pour la coloration dans la masse du papier laminé.

**11.** Utilisation des oxydes de fer pigmentaires jaunes selon revendication 1, pour la coloration dans la masse de matériaux du bâtiment.

**12.** Utilisation des oxydes de fer pigmentaires jaunes selon revendication 1, pour la coloration de peintures.

**13.** Utilisation des oxydes de fer pigmentaires jaunes selon revendication 1, pour la coloration de vernis en poudre.

**14.** Utilisation des oxydes de fer pigmentaires jaunes selon revendication 1, pour la coloration de peintures à cuire au four.